# EUROPÄISCHE PATENTSCHRIFT

(11) **EP 1 420 237 B1**
(45) Veröffentlichungstag und Bekanntmachung des Hinweises auf die Patenterteilung: **28.12.2005**
(21) Anmeldenummer: 03024411.5
(22) Anmeldetag: 23.10.2003
(51) Int. Cl.: G01L 9/14, F02D 41/00

(54) **Robuste Druckerfassung mit eingehülltem Dauermagnet und Hallsensor**
Robust pressure recording with enclosed permanent magnet and Hall transducer
Prise de pression robuste par aimant permanent enveloppé et capteur Hall

(30) Priorität: 14.11.2002 DE 10252993
(43) Veröffentlichungstag der Anmeldung: 19.05.2004
(73) Patentinhaber: Pierburg GmbH, 41460 Neuss (DE)
(72) Erfinder: Ludwig, Norbert, 41379 Brüggen (DE); Bürger, Frank, 52355 Düren (DE)
(74) Vertreter: von Kirschbaum, Alexander

(56) Entgegenhaltungen:
- EP-A- 0 388 622
- EP-A- 0 884 572
- EP-A- 1 045 365
- BE-A- 1 008 508
- DE-A- 2 444 830
- DE-A- 2 842 140
- DE-A- 10 003 569

## Beschreibung

Die Erfindung betrifft eine Druckerfassungsvorrichtung, die insbesondere für den Einsatz im Automobilbereich geeignet ist.

Bei bekannten Druckerfassungsvorrichtungen erfolgt die Druckerfassung resistiv oder kapazitiv. Insbesondere im Automobilbereich weisen derartige Druckerfassungsvorrichtungen den Nachteil auf, dass sie relativ anfällig gegenüber Fremdeinflüssen sind. Ferner weisen derartige Druckerfassungsvorrichtungen den Nachteil auf, dass kein direkter Zusammenhang zwischen der Druckänderung und dem von der Druckerfassungsvorrichtung abgegebenen Signal besteht, so dass eine geeignete Signalverarbeitung bzw. Signalumwandlung erfolgen muss, um die tatsächliche Druckveränderung bestimmen zu können.

Aus DE 100 03 569 ist eine Druckerfassungsvorrichtung bekannt, bei der ein als Magnetfelderzeuger dienender Magnet auf einer Membran angeordnet ist. Die Membran ist in einem Hohlraum angeordnet und elastisch verformbar. Dem Magnetfefderzeuger gegenüberliegend ist in einem Gehäuse ein Magnetfeldaufnehmer, wie ein Hall-Sensor, vorgesehen. Auf Grund der Elastizität der den Magneten tragenden Membran erfolgt eine elastische Verformung der Membran auf Grund einer Druckänderung. Hierdurch kann mit guter Linearität eine Druckänderung detektiert werden. Aufgabe der Erfindung ist es, eine Druckerfassungsvorrichtung für den Automobilbereich zu schaffen, die robust gegen Fremdeinflüsse ist.

Die Lösung der Aufgabe erfolgt erfindungsgemäß durch die Merkmale des Anspruchs 1.

Die erfindungsgemäße Druckerfassungsvorrichtung weist einen Magnetfelderzeuger, wie beispielsweise einen Magneten, insbesondere einen Dauermagneten, auf. Ferner ist ein Magnetfeldaufnehmer, insbesondere ein Hallsensor, zur Detektion einer Magnetfeldänderung vorgesehen. Der Magnetfelderzeuger und der Magnetfeldaufnehmer sind in der Druckerfassungsvorrichtung derart angeordnet, dass sich der Abstand zwischen dem Magnetfelderzeuger und dem Magnetfeldaufnehmer bei einer Druckänderung verändert. Diese Abstandsänderung wird von dem Magnetfeldaufnehmer detektiert. Da es sich bei dem Magnetfeldaufnehmer vorzugsweise um einen Hallsensor handelt, wird von dem Hallsensor ein elektrisches Signal abgegeben, das insbesondere direkt proportional zur Druckänderung ist. Hierbei kann es sich um ein analoges oder ein PWM-Signal handeln. Die insbesondere direkte Proportionalität zwischen der Druckänderung und dem Ausgangssignal des Magnetfeldaufnehmers kann durch eine derartige Ausgestaltung der Druckerfassungsvorrichtung realisiert werden, dass Fremdeinflüsse beispielsweise auf Grund einer Halterung zum Halten des beispielsweise bewegbaren Magnetfelderzeugers innerhalb des Messbereichs keinen oder einen vernachlässigbar geringen Einfluss haben. Zusätzlich ist es möglich, einen programmierbaren Hallsensor zu verwenden, so dass die äußeren Einflüsse, wie beispielsweise die Einflüsse einer Halterung, durch eine geeignete Programmierung ausgeglichen werden können.

Der Magnetfelderzeuger oder der Magnetfeldaufnehmer ist mit einem elastischen Halteelement verbunden. Eine Druckänderung bewirkt somit eine Bewegung des Magnetfelderzeugers oder des Magnetfeldaufnehmers in Richtung des jeweils anderen Elements. Auf Grund der Elastizität des Halteelements gelangt der Magnetfeldaufnehmer bzw. der Magnetfelderzeuger, wenn der Druck wieder auf den vorherigen Druck zurück geht, automatisch in die Ausgangslage. Als elastisches Halteelement ist vorzugsweise eine Membran bzw. ein membranartiges Bauteil vorgesehen. Erfindungsgemäß ist es hierbei, den Magnetfelderzeuger oder den Magnetfeldaufnehmer innerhalb des Halteelements anzuordnen. Bei einem beispielsweise aus einem Kunststoffmaterial hergestellten Halteelement kann der Magnetfelderzeuger oder der Magnetfeldaufnehmer innerhalb eines vorzugsweise zweilagigen Halteelements eingeschweißt sein. Dies hat den Vorteil, dass beispielsweise ein Verschmutzen des Magnetfelderzeugers oder des Magnetfeldaufnehmers, durch das eine Signalveränderung hervorgerufen würde, vermieden ist. Ferner ist es beispielsweise möglich, die elektrischen Leitungen eines insbesondere als Hallsensor ausgeführten Magnetfeldaufnehmers verschmutzungssicher und vor sonstigen Umgebungseinflüssen geschützt zwischen den Lagen des mehrlagigen Halteelements, vorzugsweise bewegungssicher, beispielsweise durch Kleben, anzuordnen.

Die erfindungsgemäße Druckerfassungsvorrichtung eignet sich insbesondere zur Druckmessung in Saugrohren von Verbrennungsmotoren. Hierbei ist es auf Grund der erfindungsgemäßen Ausgestaltung der Druckerfassungsvorrichtung möglich, auch bei Temperaturen von bis zu 150°C über lange Zeiträume von ggf. mehreren Stunden Druck in der erforderlichen Genauigkeit zu messen. Ferner weist die erfindungsgemäße Druckerfassungsvorrichtung den Vorteil auf, dass sie frei programmierbar ist. Hierdurch ist es möglich, ein und denselben Sensor in unterschiedlichen Druckbereichen zu verwenden.

Nachfolgend wird die Erfindung anhand einer bevorzugten Ausführungsform unter Bezugnahme auf die anliegende Zeichnung näher erläutert.

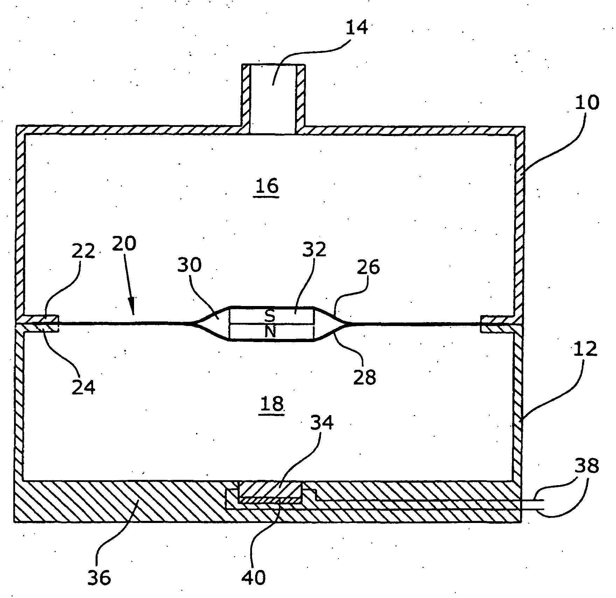

Die Figur zeigt einen Längsschnitt einer erfindungsgemäßen Magnetfelderfassungsvorrichtung.

Die dargestellte bevorzugte Ausführungsform der Magnetfelderfassungsvorrichtung ist rotationssymmetrisch, so dass das Gehäuse im Wesentlichen zylindrisch ausgebildet ist. Das Gehäuse weist eine erste Gehäusehälfte 10 sowie eine zweite Gehäusehälfte 12 auf. Die erste Gehäusehälfte 10 weist eine Öffnung bzw. einen Druckanschluss 14 auf. Durch die erste Gehäusehälfte 10 ist eine erste Druckkammer 16 ausgebildet.

Durch die zweite Gehäusehälfte 12 ist eine zweite Druckkammer 18 ausgebildet. Die beiden Druckkammern 16, 18 sind durch ein im dargestellten Ausführungsbeispiel als Membran ausgebildetes elastisches Halteelement 20 voneinander getrennt. Die Membran 20 ist im dargestellten Ausführungsbeispiel zwischen zwei nach innen weisenden kreisringförmigen Ansätzen 22, 24 der ersten Gehäusehälfte 10 bzw. der zweiten Gehäusehälfte 12 eingeklemmt.

Die Membran 20 weist zwei Lagen 26, 28 auf, die in ihrem zentralen Bereich eine Tasche 30 ausbilden. Innerhalb der Tasche 30 ist als Magnetfelderzeuger ein Dauermagnet 32 verschmutzungssicher angeordnet. Der Dauermagnet 32 weist vorzugsweise eine zylindrische Form auf.

Gegenüber dem Magnetfelderzeuger 32 ist der Magnetfeldaufnehmer 34 angeordnet. Der vorzugsweise als Hallsensor ausgebildete Magnetfeldaufnehmer 34 ist in den Boden bzw. eine Wand 36 der vorzugsweise aus Kunststoff bestehenden Gehäusehälfte 12 verschmutzungssicher eingegossen. Der Hallsensor 34 ist mit elektrischen Leitungen 38 verbunden, die beispielsweise zu einem Stecker führen um an eine Auswerteeinrichtung oder Steuerung angeschlossen werden zu können.

Alternativ sind der Magnetfelderzeuger 32 und der Magnetfeldaufnehmer 34 vertauscht. In diesem Fall sind die Leitungen 38 des Magnetfeldaufnehmers 24 zwischen den Lagen 26,28 und zwischen den Gehäusehälften 10,12 am Magnetfeldaufnehmer 34 beginnend nach außen geführt.

Im Bereich des Magnetfeldaufnehmers 34 ist ferner ein Feldverstärkungselement 40 vorgesehen. Bei dem Feldverstärkungselement 40 handelt es sich vorzugsweise um ein Eisen- oder Metallplättchen, das vorzugsweise auf der Rückseite des Hallsensors 34 angeordnet ist. Bei der Rückseite des Hallsensors 34 handelt es sich um die vom Magneten 32 abgewandte Seite.

Beispielsweise bewirkt eine Erhöhung des Drucks in der ersten Druckkammer 16 ein Bewegen des Magneten 32 in Richtung des Hallsensors 34, wobei in der zweiten Druckkammer 18 beispielsweise Umgebungsdruck herrscht. Hierdurch verändert sich der Abstand zwischen dem Magneten 32 und dem Hallsensor 34. Dies führt zu einer Magnetfeldverstärkung im Bereich des Hallsensors 34 und somit zu einer Spannungserhöhung im Hallsensor. Das von dem Hallsensor 34 abgegebene Signal ist hierbei direkt proportional zur Abstandsänderung zwischen dem Magneten 32 und dem Hallsensor 34. Diese Abstandsänderung ist im Messbereich direkt proportional zur Druckänderung zwischen den beiden Druckkammern 16, 18.

Das elastische Halteelement 20, das insbesondere als Membran ausgebildet ist, und die erste Druckkammer 16 von der zweiten Druckkammer 18 trennt, ist vorzugsweise derart angeordnet, dass die Membran 20 im Wesentlichen parallel zur Oberfläche des Hallsensors 34 verläuft, wenn in den beiden Kammern 16, 18 der gleiche Druck herrscht. Dies hat zur Folge, dass sich bei einer Druckänderung der Magnet 32 bei Überdruck in Richtung des Hallsensors 34 und bei Unterdruck in entgegengesetzte Richtung bewegt. Ein in der Figur seitliches Verschieben zwischen dem Magneten 32 und dem Hallsensor 34 ist hierbei ausgeschlossen bzw. innerhalb der geforderten Messgenauigkeit unerheblich.

## Patentansprüche

1. Druckerfassungsvorrichtung, mit
einem Magnetfelderzeuger (32) und einem Magnetfeldaufnehmer (34) zur Detektion einer Magnetfeldänderung, wobei eine Druckänderung eine Abstandsänderung zwischen dem Magnetfelderzeuger (32) und dem Magnetfeldaufnehmer (34) bewirkt, die von dem Magnetfeldaufnehmer detektierbar ist und
einem elastischen Halteelement (20), das mit dem Magnetfelderzeuger (32) oder dem Magnetfeldaufnehmer (34) verbunden ist,
**dadurch gekennzeichnet, dass**
der Magnetfelderzeuger (32) oder der Magnetfeldaufnehmer (34) innerhalb des Halteelements (20) angeordnet ist.

2. Druckerfassungsvorrichtung nach Anspruch 1, **dadurch gekennzeichnet, dass** der Magnetfeldaufnehmer (34) ein elektrisches Signal erzeugt, das insbesondere direkt proportional zur Druckänderung ist.

3. Druckerfassungsvorrichtung nach Anspruch 1 oder 2, **dadurch gekennzeichnet, dass** der Magnetfelderzeuger (32) und/ oder der Magnetfeldaufnehmer (34) zur Abstandsänderung beweglich gehalten ist.

4. Druckerfassungsvorrichtung nach Anspruch 1, **dadurch gekennzeichnet, dass** das Halteelement (20) eine Membran ist.

5. Druckerfassungsvorrichtung nach einem der Ansprüche 1 - 4, **dadurch gekennzeichnet, dass** der Magnetfelderzeuger (32) oder der Magnetfeldaufnehmer (34) zwischen einer ersten Druckkammer (16) und einer zweiten Druckkammer (18) beweglich angeordnet ist.

6. Druckerfassungsvorrichtung nach Anspruch 5, **dadurch gekennzeichnet, dass** das Halteelement (20) die erste Druckkammer (16) von der zweiten Druckkammer (18) abtrennt.

7. Druckerfassungsvorrichtung nach einem der Ansprüche 1 - 6, **dadurch gekennzeichnet, dass** das Halteelement (20) eine erste Lage (26) und eine zweite Lage (28) aufweist, wobei zwischen den Lagen (26,28) der Magnetfelderzeuger (32) oder der Magnetfeldaufnehmer (34) insbesondere in einer durch die Lagen (26,28) ausgebildeten Tasche (30) innerhalb des Halteelements (20) angeordnet ist.

8. Druckerfassungsvorrichtung nach einem der Ansprüche 1 - 7, **dadurch gekennzeichnet, dass** der Magnetfeldaufnehmer (34) mit einem Feldverstärkungselement (40) verbunden ist.

## Claims

1. A pressure sensing device, comprising
a magnetic field generator (32) and a magnetic field sensor (34) for detecting a change of a magnetic field, a pressure change effecting a change of the distance between the magnetic field generator (32) and the magnetic field sensor (34), which is able to be detected by the magnetic field sensor, and
an elastic holding element (20) connected with the magnetic field generator (32) or the magnetic field sensor (34),
**characterized in that**
the magnetic field generator (32) or the magnetic field sensor (34) is arranged within the holding element (20).

2. The pressure sensing device according to claim 1, **characterized in that** the magnetic field sensor (34) produces an electric signal which is particularly directly proportional to the pressure change.

3. The pressure sensing device according to claim 1 or 2, **characterized in that** the magnetic field generator (32) and/or the magnetic field sensor (34) is held movably to change the distance.

4. The pressure sensing device according to claim 1, **characterized in that** the holding element (20) is a diaphragm.

5. The pressure sensing device according to one of claims 1 - 4, **characterized in that** the magnetic field generator (32) or the magnetic field sensor (34) is movably arranged between a first pressure chamber (16) and a second pressure chamber (18).

6. The pressure sensing device according to claim 5, **characterized in that** the holding element (20) separates the first pressure chamber (16) from the second pressure chamber (18).

7. The pressure sensing device according to one of claims 1 - 6, **characterized in that** the holding element (20) has a first layer (26) and a second layer (28), the magnetic field generator (32) or the magnetic field sensor (34) being arranged between the layers (26,28) in a pocket (30) within the holding element (20), which is particularly formed by the layers (26,28).

8. The pressure sensing device according to one of claims 1 - 7, **characterized in that** the magnetic field sensor (34) is connected with a field strengthening element (40).

## Revendications

1. Dispositif de prise de pression comprenant
un générateur de champ magnétique (32) et un capteur de champ magnétique (34) pour détecter une variation de champ magnétique, une variation de pression provoquant une modification de la distance entre le générateur de champ magnétique (32) et le capteur de champ magnétique (34), qui peut être détectée par le capteur de champ magnétique, et
un élément de fixation élastique (20) assemblé avec le générateur de champ magnétique (32) ou avec le capteur de champ magnétique (34),
**caractérisé en ce que**
le générateur de champ magnétique (32) ou le capteur de champ magnétique (34) est disposé à l'intérieur de l'élément de fixation (20).

2. Dispositif de prise de pression suivant la revendication 1, **caractérisé en ce que** le capteur de champ magnétique (34) produit un signal électrique qui est en particulier directement proportionnel à la variation de pression.

3. Dispositif de prise de pression suivant l'une des revendications 1 et 2, **caractérisé en ce que** le générateur de champ magnétique (32) et/ou le capteur de champ magnétique (34) sont maintenus mobiles pour la modification de distance.

4. Dispositif de prise de pression suivant la revendication 1, **caractérisé en ce que** l'élément de fixation (20) est une membrane.

5. Dispositif de prise de pression suivant l'une des revendications 1 à 4, **caractérisé en ce que** le générateur de champ magnétique (32) ou le capteur de champ magnétique (34) est monté mobile entre une première chambre de pression (16) et une seconde chambre de pression (18).

6. Dispositif de prise de pression suivant la revendication 5, **caractérisé en ce que** l'élément de fixation (20) sépare la première chambre de pression (16) de la seconde chambre de pression (18).

7. Dispositif de prise de pression suivant l'une des revendications 1 à 6, **caractérisé en ce que** l'élément de fixation (20) présente une première couche (26) et une seconde couche (28), le générateur de champ magnétique (32) ou le capteur de champ magnétique (34) étant disposé entre les couches (26, 28), en particulier dans une poche (30) formée par les couches (26, 28) à l'intérieur de l'élément de fixation (20).

8. Dispositif de prise de pression suivant l'une des revendications 1 à 7, **caractérisé en ce que** le capteur de champ magnétique (34) est assemblé avec un élément de renforcement de champ (40).
